# EUROPEAN PATENT SPECIFICATION

(11) **EP 2 342 070 B1**
(45) Date of publication and mention of the grant of the patent: **26.09.2012**
(21) Application number: 08876083.0
(22) Date of filing: 31.10.2008
(51) Int. Cl.: B29D 30/38, B29C 47/02, B29C 47/52, B29D 30/46

(54) **PROCESS AND APPARATUS FOR BUILDING TYRES**
VERFAHREN UND VORRICHTUNG ZUM BAU VON REIFEN
PROCÉDÉ ET DISPOSITIF DE CONSTRUCTION DE PNEUMATIQUES

(43) Date of publication of application: 13.07.2011
(73) Proprietor: Pirelli Tyre S.P.A., 20126 Milan (IT)
(72) Inventor: MARCHINI, Maurizio, I-20126 Milano (MI) (IT); AMURRI, Cesare Emanuele, I-20126 Milano (MI) (IT)
(74) Representative: Brasca, Marco
(86) International application number: PCT/IT2008/000679
(87) International publication number: WO 2010/049958

(56) References cited:
- EP-A- 1 577 121
- WO-A-02/00421
- WO-A-2007/083346
- DE-B- 1 254 338
- DE-T5-112005 003 640
- JP-A- 10 329 234
- JP-A- 2005 280 458
- US-A- 5 529 652
- US-A- 5 698 233
- US-A1- 2004 238 979
- US-A1- 2005 048 280

## Description

The present invention relates to a process for building tyres and to an apparatus for building tyres operating in accordance with said process.

In particular, the present invention takes its place within the high-flexibility processes and apparatuses for manufacturing a tyre or part thereof, by direct laying on a forming support of a plurality of elementary components, so as to avoid storage of semifinished products in warehouses of big sizes.

A tyre generally comprises a carcass structure including at least one carcass ply having end flaps in engagement with respective annular anchoring structures, each of them being usually formed with at least one substantially circumferential annular insert onto which at least one filling insert radially tapering away from the rotation axis is applied.

Associated with the carcass structure, at a radially external position, is a belt structure comprising one or more belt layers, disposed in radially superposed relationship relative to each other and to the carcass ply, having textile or metallic reinforcing cords with a crossed orientation and/or substantially parallel to the circumferential extension direction of the tyre. A tread band is applied at a radially external position to the belt structure, said tread band too being made of elastomeric material like other semifinished products constituting the tyre.

A so-called "underlayer" is interposed between the tread band and the belt structure and it is made of elastomeric material having properties adapted to ensure a steady union between belt structure and tread band.

Respective sidewalls of elastomeric material are in addition applied onto the side surfaces of the carcass structure, each extending from one of the side edges of the tread band until close to the respective annular anchoring structure to the beads.

It is to be pointed out that, to the aims of the present description, by the term "elastomeric material" it is intended a composition comprising at least one elastomeric polymer and at least one reinforcing filler. Preferably, this composition further comprises additives such as a cross-linking agent and/or a plasticizer, for example. Due to the presence of the cross-linking agent, this material can be cross-linked through heating, so as to form the final article of manufacture.

In tyres of the "tubeless" type, the carcass ply is fully coated with a layer of a preferably butyl-based elastomeric material, usually referred to as "liner", which has optimal airtightness features and extends from one of the beads to the other.

It should be noticed that by "elementary component" of a tyre in this context it can be intended a continuous elongated element of elastomeric material, a textile or metallic rubberised cord, a strip-like element. More specifically, in this context by "strip-like element" it is intended a ribbon-like element cut to size formed with one or more reinforcing thread elements (preferably textile or metallic cords) substantially parallel to each other, coated with or buried in an elastomeric material.

In traditional processes for manufacturing a tyre the tyre components, i.e. for instance the liner, under-liner, carcass plies, belt strips, bead core, filling inserts, sidewall inserts, abrasion-proof material, reinforcing fabrics, under-layer of the tread band, tread band, sidewalls, are made separately from each other in respective work stations, and then stored in storage stations or warehouses from which they are subsequently picked up for mutual assembly along a tyre building line.

Document EP 0 619 170 discloses a method and an apparatus for producing a sheet of rubberised wires as the reinforcing material for the ply or belt of a tyre. A plurality of wires pass through an extruder that individually coats them with rubber and subsequently pass through a calender of the roller type forming a sheet of rubberised wires of the desired width. The wires coming from a rack are guided to an alignment device and then into the extruder. The alignment device has a plurality of holes in each of which a wire passes. The rubberised wires coming out of the extruder are partly wound around an organiser roller, and will then enter the calender.

Document US 5,337,972 discloses a method and an apparatus for making a carcass or belt strip reinforced with steel wires fed from a plurality of reels. The wires run towards a guide plate provided with a plurality of small apertures disposed in three rows spaced apart from each other. The wires are thus disposed in three planes that intercept each other at a pair of guide rollers between which they are introduced. The wires emerge in a horizontal plane and are subsequently introduced through a second pair of guide rollers capable of ensuring correct feeding of the wires to an extruder. The wires are coated with two rubber sheets and pressed in the extruder so as to form a length of carcass ply or reinforced belt used in tyre production.

Document US 2005/0147702 discloses an extruder for rubber-coating a plurality of cords so as to make a reinforcing material for portions of vehicle tyres, such as the carcass, belt or sidewalls. The extruder comprises an insert having a flat surface provided with grooves inside which the cords run.

It is also known form document EP 1 577 121 a producing method of a steel cord ply which includes first and second topping steps. In the first topping step, a first topping rubber is concentrically attached to a periphery of each steel cord. In the second topping step, a second topping rubber is attached to at least one surface of a steel cord array in which the steel cords forms a sheet-like steel cord ply. The first topping step is carried out immediately before the second topping step.

Document DE 11 2005 003640 discloses a method of aligning cords in a calender line, in which a calender apparatus performs rubber topping to manufacture a topping sheet while forwarding a multiplicity of cords in an aligned state and a press roll and a comb roll, which are provided with grooves for holding a multiplicity of cords in an aligned state, are arranged in parallel on an upstream side of a topping roll in a cord forwarding direction in the calender apparatus to fit the multiplicity of cords into grooves of both the press roll and the comb roll to hold the same in an aligned state to feed the same to a topping roll portion.

Document US 2005/048280 discloses an apparatus and process to make tape which can be used as cap plies, breakers and reinforcement in the carcass of tires. The tape is made by dipping a plurality of single end cords in a solvent-based cement. The cords are converged before entering the dip pan so that they are fixed in a single plane when they are dipped. The cement, which comprises solvent and an elastomeric composition, is dried so that the majority of the solvent evaporates. The elastomeric composition remains, encapsulating the cords, thereby forming the tape.

Document WO 02/00421 discloses a method and a plant for manufacturing a belt package and a crown structure incorporating a belt structure. The method for producing the belt package provides for the subsequent formation on said belt structure of a rubber mixture layer incorporating a plurality of reinforcing cords, while the method for producing the crown structure provides for the subsequent assembly of a tread on the belt package thus formed. The rubber mixture layer incorporating the reinforcing cords and the tread are both produced in a substantially continuous manner immediately upstream of at least one assembly drum.

More recently, high-flexibility production processes have been developed which are able to avoid storage in warehouses of the semifinished products intended for tyre building.

Document WO 00/35666 in the name of the same Applicant, in accordance with a high-flexibility type of production process illustrates a tyre building process that is carried out with the aid of an apparatus comprising one or more toroidal supports, each of which, through one or more robotized arms, is sequentially led to interact with one or more work stations distributed along a building line for determining assembly of the components of the respective tyre following a predetermined sequence. Each tyre component is formed by directly applying one or more elementary components onto the toroidal support.

In accordance with a different type of high-flexibility production process, the carcass structure and belt structure are made separately from each other in respective work stations by laying of the above mentioned elementary components onto respective building drums, and are subsequently mutually assembled, as described for example in document WO 2008/99236 in the name of the same Applicant. More particularly, a building drum is first engaged in a building station in which a so-called carcass sleeve, comprising the carcass ply/plies coupled to the respective annular anchoring structures, is made. To this aim, suitable members sequentially apply a plurality of strip-like elements disposed transversely of the circumferential extension of the outer surface, while the building drum is being driven in rotation in a step-by-step motion. The building drum carrying the carcass sleeve is then transferred from the building station to a shaping station for receiving in engagement an outer sleeve integrating the belt structure. The outer sleeve is prepared by formation or winding of one or more belt layers adapted to manufacture the belt structure on an auxiliary drum, and by subsequent winding of the tread band on the belt structure carried by the auxiliary drum, by means of members supplying a continuous elongated element of elastomeric material to be applied in the form of coils disposed in side by side and radially superposed relationship.

In high-flexibility processes like those described above, among the mentioned elementary components it is necessary to produce the aforesaid strip-like elements through manufacture of continuous ribbon-like elements comprising one or more metallic or textile cords coated with or buried in an elastomeric material.

The Applicant has found that known calenders, like those described in the above mentioned documents EP 0 619 170 and US 5,337,972 are too bulky and cannot be adopted in combination with the high-flexibility apparatuses of the type disclosed in WO 00/35666 and WO 2008/99236, in which it is necessary to position the devices producing the continuous ribbon-like elements along the building line often in a continuous manner and at points that must lend themselves to variations based on the type of tyre to be manufactured.

The Applicant has further noticed that apparatuses as those disclosed in the aforesaid documents EP 0 619 170, US 5,337,972 and US 2005/0147702 run the risk of damaging the reinforcing thread elements being part of the elementary component under production. In fact, the reinforcing thread elements are guided by holes or passageways within plates or metal bodies and, during running, exert a slight rubbing or frictional action against the inner walls of the latter. This action causes wear of the thread elements, which adversely affects the quality of the elementary component being produced, and also of the walls of the guide plates/bodies that after a predetermined work period must be replaced.

In addition, the Applicant has observed that if the thread elements are cords made up of several twisted wires, friction with the hole walls can give rise to jamming of said wires and consequent breaking. This phenomenon is particularly apparent if said cords are of the type provided with an auxiliary wire referred to as "wrapped cord" wound on the cord in a direction opposite to the mutual winding direction of the wires of the cord itself. The auxiliary wire touches the walls and carries out displacements on the cord varying its pitch and the properties of the thread element.

In this technical field, the Applicant has therefore felt the necessity to manufacture ribbon-like elements comprising at least one reinforcing thread element by means of a compact and flexible rubberising head expressly studied for being integrated with the recent high-flexibility apparatuses without showing the above verified drawbacks.

More specifically, the Applicant has found that it is possible to overcome the above described problems by manufacturing said continuous ribbon-like element necessary for building a tyre comprising a plurality of strip-like elements, by feeding at least one thread element to a pair of opposite rubberising cylinders, through an opening bound by two circumferential grooves formed in respective opposite guide rollers.

More particularly, in a first aspect, the present invention relates to a process for building tyres according to claim 1.

The Applicant has verified that the processes according to the invention allow building of tyres having components as per design and, among other things, also improving the production capability because for the production equipment used in these processes a reduced maintenance is required, being consequently reduced the time of inactivity of the machine.

In accordance with a second aspect, the present invention relates to an apparatus for building tyres according to claim 15.

Also laying of the elastomeric material takes place without relative movements between the thread elements and the components of the rubberising head, thus avoiding the occurrence of all type of frictional sliding.

The channelling surfaces are used to preform the elastomeric material before it is compressed between the rubberising cylinders, so as to better control the shape of the ribbon-like element thus obtained.

The Applicant has further verified that the rubberising head belonging to the apparatuses in accordance witch the invention is of such a compactness that use and integration of same into the high-flexibility plants of the type disclosed in WO 00/35666 and WO 2008/99236 is allowed.

The present invention, in at least one of the above aspects, can have one or more of the preferred features hereinafter described.

Preferably, the reinforcing thread element drives the guide rollers in rotation, said guide rollers being idler rollers.

This feature ensures that the peripheral speed of the rollers is always equal to the linear speed of the thread elements passing therealong.

Preferably, each reinforcing thread element substantially runs in the same plane.

Alternatively, the reinforcing thread elements are organised in two groups, said groups running in distinct and parallel planes.

The thread elements are guided by the openings bounded by the rollers without partial winding of said thread elements around the rollers being necessary. Consequently, guide rollers of small sizes can be adopted, so as to reduce the sizes of the rubberising head to a minimum.
In addition, arrangement of the thread elements in two planes enables density of said threads in the produced ribbon-like element to be increased.

Preferably, the process further comprises the step (i^{vi}) of adjusting the mutual position of the rubberising cylinders.

In addition, preferably, said step (i^{vi}) takes place relative to the channelling surfaces.

Said adjustments allow the geometric features (thickness, width) of the ribbon-like element to be varied based on the production requirements.

According to a preferred embodiment of the process, said step (ii) is directly carried out on the continuous ribbon-like element coming out of the rubberising head.

Preferably, said rubberising head comprises said guide rollers and a pair of rubberising cylinders.

Alternatively, the process comprises the step of winding the continuous ribbon-like element on a reel before carrying out said step (ii).

In both cases, the ribbon-like element is at all events produced based on contingent requirements.

In accordance with a preferred embodiment, said at least one reinforcing thread element comprises a cord formed of wires mutually wound in a first way and of an auxiliary wire wound on the cord in a second way opposite to the first one.

The specified type of cord (used above all for high-performance tyres) allows the weight of said cord to be limited, the obtained stiffness being the same, but, due to the cord structure, i.e. due to the presence of the outer auxiliary wire, said cord has more problems in passing through the thread guides of the known art.

According to a preferred embodiment of the process, said component of the tyre being processed belongs to a belt structure.

Alternatively, said component of the tyre being processed belongs to a carcass structure.

According to a preferred embodiment of the process, during said step (iii) the strip-like elements are applied in such a manner that they are arranged transversely of the equatorial plane of the forming support.

Preferably, a further component of the tyre being processed is manufactured by a step (v) comprising the step of winding the continuous ribbon-like element into coils on the forming support at the end of said step (i).

Preferably, the guide roller has a plurality of circumferential grooves disposed in side by side relationship for guiding a plurality of reinforcing thread elements disposed in side by side relationship.

In accordance with a preferred embodiment, both guide rollers have at least one circumferential groove.

Preferably, said at least one circumferential groove of a roller faces said at least one circumferential groove of the other roller.

Each pair of grooves therefore delimits an opening and the reinforcing thread elements lie substantially all in the same plane.

Alternatively, said at least one circumferential groove of a roller is axially offset relative to said at least one circumferential groove of the other roller. Each opening is therefore delimited by a ridge of a roller and by the groove of the other roller. The reinforcing thread elements substantially lie in two distinct and thread elements substantially lie in two distinct and parallel planes.

In addition, preferably the guide rollers are idler rollers.

Preferably, the guide rollers have a diameter included between about 5 mm and about 60 mm.

The stated measures enable the bulkiness of the rubberising head on the whole to be reduced.

Preferably, said at least one opening has a passage section included between about 0.25 mm² and about 4 mm².

In addition, preferably, the openings disposed in side by side relationship are mutually spaced apart by a distance included between about 0.1 mm and about 2 mm.

By replacement of said guide rollers alone, it is possible to produce ribbon-like elements having different features, for instance in terms of number of cords, geometry of each individual cord, pitch between the cords, etc.

Preferably, the rubberising head comprises devices for adjusting the mutual position of the rubberising cylinders.

Preferably, the rubberising head comprises devices for adjusting the position of the rubberising cylinders relative to the channelling surfaces.

In a preferred embodiment, the rubberising head comprises feeding ducts for supplying the elastomeric material, each having a orifice facing a respective rubberising cylinder.

Since the elastomeric material is fed through the ducts, adjustment of the flow rate of same, together with adjustment of the position of the rubberising rollers, allows easy control of the geometry of the obtained ribbon-like element.

In addition, preferably, the body of the rubberising head contains feeding ducts for supplying the elastomeric material, each of them having a orifice facing a respective rubberising cylinder.

Preferably, each of the channelling surfaces is interposed between the respective orifice and the outlet.

The rubberising head comprises all the necessary elements for producing the ribbon-like element and, at desired point of the plant without giving rise to any problem.

Further features and advantages will become more apparent from a description of a preferred but not exclusive embodiment of a process and an apparatus for building tyres in accordance with the present invention. This invention will be set out hereinafter with reference to the accompanying drawings, given by way of non-limiting example, in which:
- Fig. 1 is a diagrammatic perspective top view of a plant for tyre production comprising an apparatus in accordance with the present invention;
- Fig. 2 diagrammatically shows a second embodiment of a plant for tyre production comprising an apparatus in accordance with the present invention;
- Fig. 3 shows a tyre in diametrical half-section;
- Fig. 4 is a perspective view of a continuous ribbon-like element obtained following the process in accordance with the invention;
- Fig. 4a is an enlarged cross-section view of an alternative embodiment of a thread element belonging to the continuous ribbon-like element seen in Fig. 4;
- Fig. 5 shows a forming support during laying of strip-like elements obtained from the continuous ribbon-like element seen in Fig. 4;
- Fig. 6 is a longitudinal section of a rubberising head belonging to the apparatus in accordance with the invention;
- Fig. 7 is a front view of a detail of the rubberising head seen in Fig. 6, to an enlarged scale;
- Fig. 8 shows an alternative embodiment of the detail seen in Fig. 7.

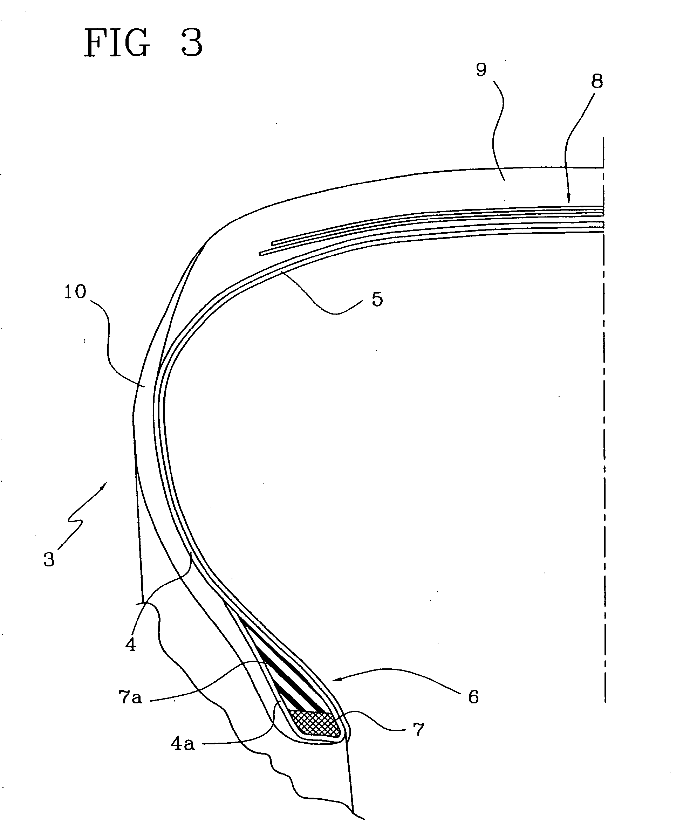

With reference to the drawings, a plant for tyre production comprising a building apparatus 2 in accordance with the present invention has been generally denoted by reference numeral 1. Plant 1 is designed to manufacture tyres 3 (Fig. 3) comprising a carcass structure essentially including at least one carcass ply 4 preferably internally coated with a layer of elastomeric material impervious to air, or a so-called "liner", and two so-called "beads" 6 integrating respective annular anchoring structures 7 possibly associated with elastomeric fillers 7a and in engagement with the circumferential edges 4a of the carcass ply 4. Tyre 3 further comprises a belt structure 8 applied at a radially external position to the carcass ply 4, a tread band 9 applied at a radially external position to the belt structure 8, in a so-called crown region of tyre 3, and two sidewalls 10 applied to the carcass ply 4 at laterally opposite positions, each at a lateral region of tyre 3 extending from the corresponding bead 6 to the corresponding side edge of the tread band 9.

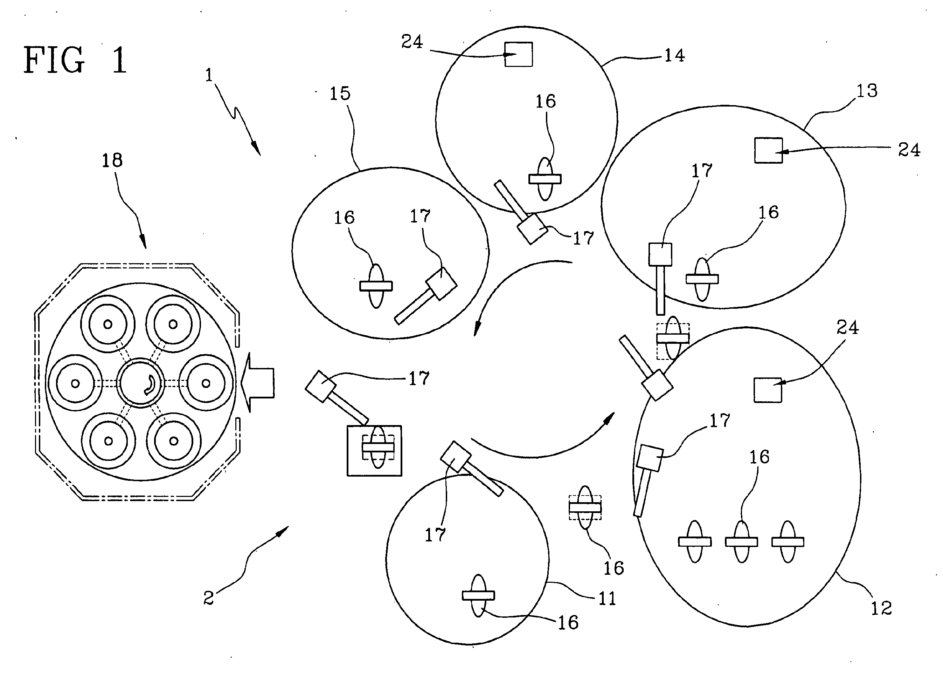

The building apparatus 2 may comprise a plurality of building stations 11, 12, 13, 14, 15 (Fig. 1), each provided with a building device, not shown, designed to form a component of tyre 3 being processed directly on a forming support 16 preferably of toroidal conformation and more preferably having a radially external forming surface of same shape as the radially internal surface of tyre 3 when building has been completed.

By way of example, shown in Fig. 1 is a first station 11 in which at least one component of elastomeric material is manufactured, liner 5 for example, through winding of a continuous elongated element of elastomeric material into mutually approached coils distributed along the forming surface of the forming support 16.

In at least one second building station 12 manufacture of one or more carcass plies 4 can be carried out, which carcass plies are obtained by laying strip-like elements B in circumferentially approached relationship on the forming support 16, said strip-like elements B being formed from a continuous ribbon-like element S cut to size and comprising reinforcing thread elements t, such as textile or metallic cords arranged parallelly in side by side relationship.

A third building station 13 can be dedicated to manufacture of the annular anchoring structures 7 and of fillers 7a integrated into the tyre beads 6, for example by laying at least one rubberised metallic cord in the form or radially superposed coils and, respectively, winding a continuous elongated element of elastomeric material into mutually approached coils distributed along said forming surface.

At least one fourth building station 14 can be dedicated to manufacture of the belt structure 8 obtained for example through laying of strip-like elements B in circumferentially approached relationship, said strip-like elements being formed from a continuous ribbon-like element S of elastomeric material comprising cords t that are preferably metallic and mutually parallel, and/or through winding either of at least one preferably metallic, rubberised reinforcing cord into axially approached coils, or of a continuous ribbon-like element S of elastomeric material comprising cords t, preferably metallic and parallel to each other, in the crown region of tyre 3.

At least one fifth building station 15 can be provided for manufacturing the tread band 9 and the sidewalls 10. Tread band 9 and sidewalls 10 are preferably obtained through winding of at least one continuous elongated element of elastomeric material, into mutually approached and/or radially superposed coils.

The building stations 11, 12, 13, 14, 15 can work simultaneously, each on a respective tyre being processed carried by a respective forming support 16, sequentially transferred from a building station to the subsequent one, by means of robotized arms 17 or other suitable devices. Tyres 3 built by apparatus 2 are sequentially transferred to at least one vulcanisation unit 18 integrated into plant 1.

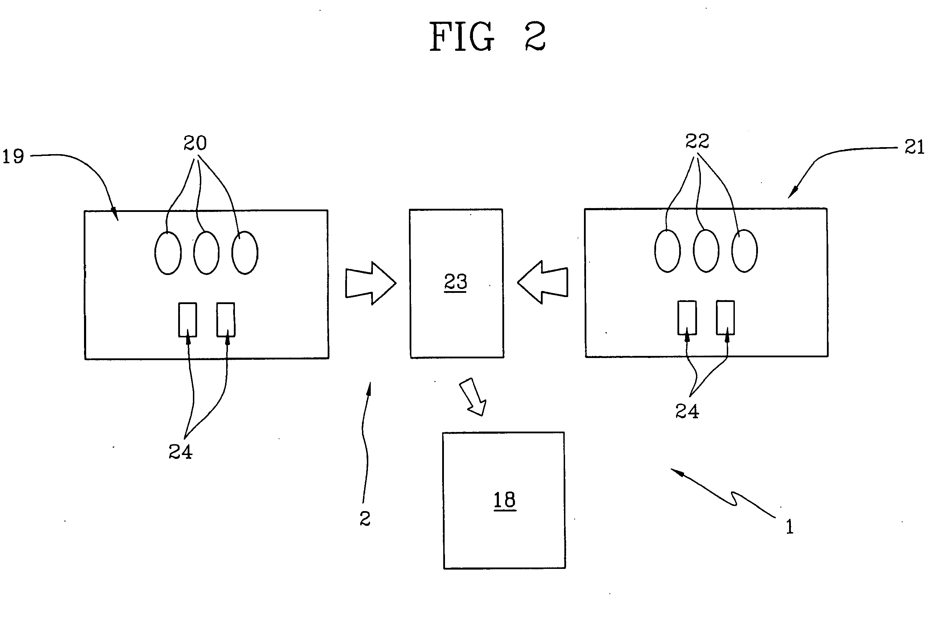

In an alternative embodiment of plant 1, diagrammatically shown in Fig. 2 by way of example, apparatus 2 comprises a carcass-building line 19, at which one or more first forming supports 20 that are preferably cylindrical, are sequentially handled between different work stations (not shown), each provided with a building device that, on said forming support 20, is designed to form a carcass sleeve comprising at least one carcass ply 4, liner 5, annular anchoring structures 7 and possibly at least part of sidewalls 10. Manufacture of one or more carcass plies 4 is preferably obtained by laying on the first forming support 10, in circumferentially, approached relationship, strip-like elements B formed from a continuous ribbon-like element S cut to size and comprising reinforcing thread elements t (textile or metallic cords) disposed parallelly in side by side relationship. The strip-like elements B are disposed transversely relative to an equatorial plane of the forming support 20. Simultaneously, in an outer-sleeve building line 21, one or more second forming supports 22, that are preferably cylindrical, are sequentially handled between different work stations (not shown) designed to form one outer sleeve on each second forming support 22, which outer sleeve comprises at least the belt structure 8, tread band 9, and possibly at least part of sidewalls 10.

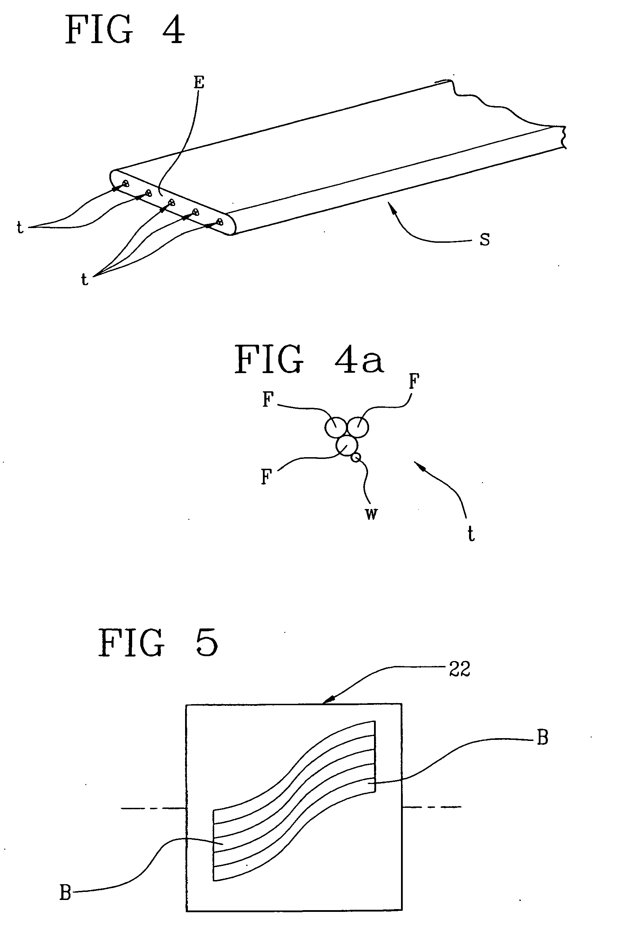

More specifically, manufacture of the belt structure 8 comprises manufacture of at least one belt layer preferably obtained by laying on the second forming support 22 (Fig. 5), in circumferentially approached relationship, strip-like elements B formed from a continuous ribbon-like element S cut to size and comprising reinforcing thread elements t, preferably metallic, disposed parallelly in side by side relationship, and/or through winding of at least one preferably metallic, rubberised reinforcing cord into axially approached coils, or of a continuous ribbon-like element S of elastomeric material comprising preferably metallic cords that are parallel to each other. The strip-like elements B are disposed transversely relative to an equatorial plane of the second forming support 22.

Apparatus 2 further comprises an assembling station 23 at which the outer sleeve is removed from the second forming support 22 to be coupled to the carcass sleeve formed on the first forming support 20 through shaping of the carcass sleeve into a toroidal configuration. Finally, tyres 3 are sequentially transferred to the vulcanisation unit 18.

In accordance with the invention, some of the above mentioned building devices are adapted to form the components of tyre 3 being processed directly on the respective forming supports 16, 20, 22 starting from the aforesaid continuous ribbon-like elements S each comprising at least one reinforcing thread element t (one of these ribbon-like elements S is shown in Fig. 4).

Each reinforcing thread element t comprises a cord formed with twisted wires f mutually wound in a first winding direction. Possibly, as shown in Fig. 4a, the cord t is further provided with an auxiliary wire w (referred to as "wrapped cord") wound on the cord in a second winding direction, opposite to the first one, and having a pitch preferably different from that of said wires.

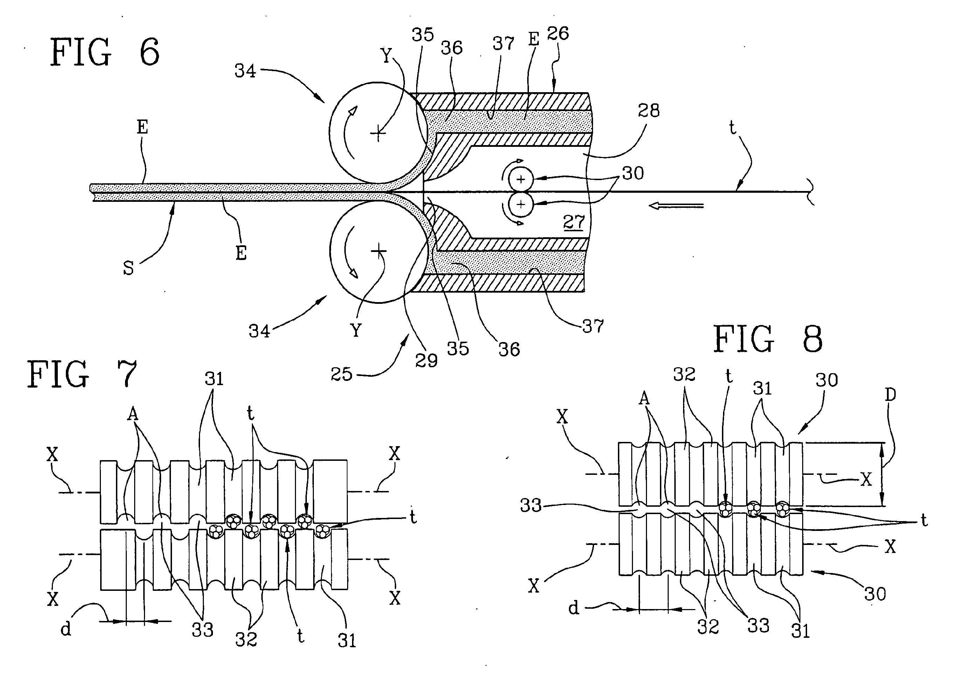

Said building stations 11, 12, 13, 14, 15 and said building lines 19 and 21 comprise forming devices (diagrammatically shown in Figs. 1 and 2), each comprising a rubberising head 25 (Fig. 6) adapted to manufacture the continuous ribbon-like element S through laying of one or more layers of elastomeric material E on one or more reinforcing thread elements t, fed by devices not shown to the rubberising head 25.

The rubberising head 25 comprises a body 26 delimiting an inner cavity 27 communicating with the external environment through an inlet 28 and an outlet 29.

One or more reinforcing thread elements t enters the inlet 28, passes through the inner cavity 27 and comes out of the outlet 29, covering a straight path of travel in a predetermined advancing direction.

The inner cavity 27 houses a pair of guide rollers 30 mounted idly on body 26 and having parallel rotation axes X-X. Each of rollers 30 is provided, on a cylindrical outer surface thereof, with a plurality of circular grooves 31 coaxial with the respective rotation axis X-X and delimiting ridges 32 between them. The two rollers 30 face each other so as to delimit a plurality of openings 33 in register with grooves 31.

Each of said thread elements t passes through one of openings 33 and is guided by this opening 33 in such a manner that it keeps a predetermined distance d from the other thread elements t. The size of said openings is of such a nature that the respective thread element t touches the guide rollers 30 and, moving forward, drives them in rotation, in this way avoiding any possible frictional sliding action against said rollers 30.

Only some of said thread elements t have been shown in Figs. 7 and 8 for a better view of openings 33.

In the embodiment shown in Fig. 7, grooves 31 of one of the guide rollers 30 are axially offset relative to grooves 31 of the other guide roller 30. Each opening 33 is therefore delimited by the ridge 32 of a roller 30 and the groove 31 of the other roller. Consequently, the reinforcing thread elements t are divided into two groups lying in distinct and parallel planes.

In the alternative embodiment shown in Fig. 8, each of the grooves 31 of one of the guide rollers 30 faces a respective groove 31 of the other guide roller 30. Each opening 33 is therefore delimited by one groove 31 of a roller 30 and one groove 31 of the other roller. All reinforcing thread elements t substantially lie in the same plane.

The guide rollers 30 are interposed between inlet 28 and outlet 29, their rotation axes X-X being disposed transversely relative to the path of travel covered by the tread elements t.

The guide rollers 30 preferably have a diameter D included between about 5 mm and about 60 mm. Openings 33 have a passage section A included between about 0.25 mm² and about 4 mm². Two openings 33 disposed in side by side relationship are mutually spaced apart by a distance d (pitch between the thread elements t) included between about 0.1 mm and about 2 mm.

The rubberising head 25 further comprises a pair of rubberising cylinders 34 located externally of the inner cavity 27 and close to outlet 29, and driven in rotation by motors not shown. The rubberising cylinders 34 have parallel rotation axes Y-Y and face each other on opposite sides of the path of travel covered by the reinforcing thread elements t coming out of body 26. The motors move the rubberising cylinders 34 in opposite rotation ways, so that their peripheral speed in the region of mutual facing is in the same way as the advancing direction of the reinforcing thread elements t.

The Applicant has further noticed that rollers 30 must be basically of the smallest possible diameter for being positioned as close as possible to cylinders 34, for the purpose of keeping the pitch between the thread elements t constant in the region between rollers 30 and cylinders 34; in fact the closer rollers 30 are to cylinders 34, the less the thread elements t are likely to move and modify the pitch.

Body 26 further delimits a pair of channelling surfaces 35, each of which extends starting from outlet 29 away from said outlet 29 towards the orifice 36 of a duct 37 for feeding the elastomeric material E which is formed inside the walls of body 26. The elastomeric material E is admitted to the feeding ducts 37 through an access (not shown) by feeding devices not shown too.

Each of the two orifices 36 opens towards one of the rubberising cylinders 34 which is located close to one of the channelling surfaces 35 and delimits a passageway for the elastomeric material E emitted by orifice 36, together with said channelling surface 35.

The channelling surfaces 35 are arched and the passageways for the elastomeric material E extend along an arc that is substantially concentric with the rotation axis Y-Y of the respective rubberising cylinder 34. The rubberising head 25 is preferably symmetric relative to the path of travel covered by the thread elements t.

By the aforesaid passageways, the elastomeric material E is shaped like a sheet which adheres to the respective cylinder 34, is brought between said cylinders 34 and is therein applied to the reinforcing thread elements t.

The mutual position of the rubberising cylinders 34 (and therefore the passage port between said cylinders) and the position of each cylinder 34 relative to the respective channelling surface 35 (and therefore the width of the passageways for the elastomeric material E) can be adjusted, by devices not shown, in such a manner as to change the cross-section shape of the continuous ribbon-like element S, possibly by also adjusting the flow rate of the elastomeric material E admitted into the feeding ducts 37.

The continuous ribbon-like element S coming out of the rubberising head 25 is cut to size in order to form the strip-like elements B subsequently applied to the forming support 16, 20, 22, as already detailed above, or immediately wound into coils on the forming support 16, 20, 22, or wound on a reel before being applied to said support 16, 20, 22.

## Claims

1. A process for building tyres, comprising the step of forming at least one component of the tyre (3) being processed directly on a forming support (16, 20, 22), wherein said at least one component is manufactured by the steps of:
(i) producing a continuous ribbon-like element (S) comprising at least one reinforcing thread element (t);
(ii) cutting said continuous ribbon-like element (S) to size so as to form a strip-like element (B);
(iii) applying said strip-like element (B) onto the forming support (16, 20, 22);
(iv) repeating steps (ii) and (iii) until forming said at least one component;
wherein the continuous ribbon-like element (S) is produced by means of the following steps:
(i') feeding said at least one reinforcing thread element (t) through an opening (33) bounded by at least one circumferential groove (31) formed in at least one of two guide rollers (30) facing each other;
(i'') laying at least one layer of elastomeric material (E) on said at least one reinforcing thread element (t) ;
wherein the two guide rollers (30) are housed in an inner cavity (27) delimited by a body (26) of a rubberising head (25);
wherein said body (26) carries two channelling surfaces (35) for the elastomeric material, each facing a respective rubberising cylinder (34);
wherein the step (i'') comprises the steps of:
(i"') feeding said at least one reinforcing thread element (t) to the rubberising cylinders (34);
(i^{iv}) introducing the elastomeric material (E) between said rubberising cylinders (34);
wherein said step (i^{iv}) comprises the step (i^{v}) of feeding said elastomeric material (E) between each channelling surface (35) and the respective rubberising cylinder (34).

2. A process as claimed in claim 1, wherein the reinforcing thread element (t) drives the guide rollers (30) in rotation, said guide rollers (30) being idler rollers.

3. A process as claimed in claim 1, wherein each reinforcing thread element (t) substantially runs in one and the same plane.

4. A process as claimed in claim 1, wherein the reinforcing thread elements (t) are organised in two groups, said groups running in distinct and parallel planes.

5. A process as claimed in claim 1, further comprising the step (i^{vi}) of adjusting the mutual position of the rubberising cylinders (34).

6. A process as claimed in claim 5, wherein said step (i^{vi}) takes place relative to the channelling surfaces (35).

7. A process as claimed in claim 1, wherein said step (ii) is directly carried out on the continuous ribbon-like element (S) coming out of the rubberising head (25).

8. A process as claimed in claim 7, wherein said rubberising head (25) comprises said guide rollers (30) and a pair of rubberising cylinders (34).

9. A process as claimed in claim 1, comprising the step of winding the continuous ribbon-like element (S) on a reel before carrying out said step (ii).

10. A process as claimed in claim 1, wherein said at least one reinforcing thread element (t) comprises a cord formed of wires mutually wound in a first way and of an auxiliary wire wound on the cord in a second way opposite to the first one.

11. A process as claimed in claim 1, wherein said component of the tyre (3) being processed belongs to a belt structure (8).

12. A process as claimed in claim 1, wherein said component of the tyre (3) being processed belongs to a carcass structure.

13. A process as claimed in claim 1, wherein during said step (iii) the strip-like elements (B) are applied in such a manner that they are arranged transversely of the equatorial plane of the forming support (16, 20, 22).

14. A process as claimed in claim 1, wherein a further component of the tyre (3) being processed is manufactured by a step (v) comprising the step of winding the continuous ribbon-like element (S) into coils on the forming support (16, 20, 22) at the end of said step (i).

15. An apparatus for building tyres, comprising:
- at least one forming support (16, 20, 22);
- at least one building device for forming at least one component of the tyre (3) being processed directly on the forming support (16, 20, 22) starting from a continuous ribbon-like element (S) comprising at least one reinforcing thread element (t);
- at least one forming device (24) comprising at least one rubberising head (25) and devices for feeding said at least one reinforcing thread element (t) to the rubberising head (25);
wherein the rubberising head (25) comprises:
- a pair of guide rollers (30), at least one having at least one circumferential groove (31); the guide rollers (30) facing each other for delimiting at least one opening (33) for said at least one reinforcing thread element (t);
- a pair of rubberising cylinders (34) located downstream of the guide rollers (30), to lay at least one layer of elastomeric material (E) on said at least one reinforcing thread element (t);
**characterised in that** the rubberising head (25) comprises a body (26) delimiting an inner cavity (27) housing the guide rollers (30) and having an inlet (28) for said at least one reinforcing thread element (t) and an outlet (29) positioned between the rubberising cylinders (34); wherein the body (26) of the rubberising head (25) carries channelling surfaces (35) for the elastomeric material (E), each facing a respective rubberising cylinder (34).

16. An apparatus as claimed in the preceding claim, wherein the guide roller (30) has a plurality of circumferential grooves (31) disposed in side by side relationship for guiding a plurality of reinforcing thread elements (t) disposed in side by side relationship.

17. An apparatus as claimed in claim 15, wherein both guide rollers (30) have at least one circumferential groove (31).

18. An apparatus as claimed in the preceding claim, wherein said at least one circumferential groove (31) of a roller (30) faces said at least one circumferential groove (31) of the other roller (30).

19. An apparatus as claimed in claim 17, wherein said at least one circumferential groove (31) of a roller (30) is axially offset relative to said at least one circumferential groove (31) of the other roller (30).

20. An apparatus as claimed in claim 15, wherein the guide rollers (30) are idler rollers.

21. An apparatus as claimed in claim 15, wherein the guide rollers (30) have a diameter included between about 5 mm and about 60 mm.

22. An apparatus as claimed in claim 15, wherein said at least one opening (33) has a passage section (A) included between about 0.25 mm² and about 4 mm².

23. An apparatus as claimed in claim 15, wherein the openings (33) disposed side by side are mutually spaced apart by a distance (d) included between about 0.1 mm and about 2 mm.

24. An apparatus as claimed in claim 15, wherein the rubberising head (25) comprises devices for adjusting the mutual position of the rubberising cylinders (34).

25. An apparatus as claimed in claim 15, wherein the rubberising head (25) comprises devices for adjusting the position of the rubberising cylinders (34) relative to the channelling surfaces (35).

26. An apparatus as claimed in claim 15, wherein the rubberising head (25) comprises feeding ducts (37) for supplying the elastomeric material (E), each having a orifice (36) facing a respective rubberising cylinder (34).

27. An apparatus as claimed in claim 15, wherein the body (26) of the rubberising head (25) contains feeding ducts (37) for supplying the elastomeric material (E), each of them having a orifice (36) facing a respective rubberising cylinder (34).

28. An apparatus as claimed in claim 15, wherein each of the channelling surfaces (35) is interposed between the respective orifice (36) and the outlet (29).

## Patentansprüche

1. Prozess zum Bauen von Reifen, umfassend den Schritt des Formens zumindest einer Komponente des Reifens (3), der direkt auf einen Formungsträger (15, 20, 22) prozessiert wird, wobei die zumindest eine Komponente hergestellt wird durch die Schritte:
(i) Produzieren eines kontinuierlichen bandartigen Elements (S), das zumindest ein Verstärkungsgarnelement (t) umfasst;
(ii) Zerschneiden des kontinuierlichen bandartigen Elements (S), um ein streifenartiges Element (B) auszubilden;
(iii) Aufbringen des streifenartigen Elementes (B) auf den Formungsträger (16, 20, 22),
(iv) Wiederholen der Schritte (ii) und (iii) bis die zumindest eine Komponente ausgebildet ist;
wobei das kontinuierliche bandartige Element (S) mittels der nachfolgenden Schritte hergestellt wird:
(i') Zuführen des zumindest einen Verstärkungsgarnelements (t) durch eine Öffnung (33), die durch zumindest eine Umfangsrille (31) umgrenzt ist, welche in zumindest einer von zwei Führungswalzen (30), die zueinander weisen, ausgebildet ist;
(i'') Ablegen zumindest einer Schicht elastomeren Materials (E) auf dem zumindest einen Verstärkungsfadenelement (t);
wobei die zwei Führungswalzen (30) in einer inneren Höhlung (27) untergebracht ist, die durch ein Gehäuse (26) eines gummierenden Kopfs (25) untergebracht sind;
wobei das Gehäuse (26) zwei kanalisierende Oberflächen (35) für das elastomere Material trägt, die beide zu einem entsprechenden gummierenden Zylinder (34) weisen;
wobei der Schritt (i'') die Schritte umfasst:
(i''') Zuführen des zumindest einen Verstärkungsgarnelementes (t) den gummierenden Zylindern (34);
(i^{iv}) Einführen des elastomeren Materials (E) zwischen den gummierenden Zylindern (34);
wobei der Schritt (i^{iv}) den Schritt (i^{v}) des Zuführens elastomeren Materials (E) zwischen jeder kanalisierenden Oberfläche (35) und dem jeweiligen gummierenden Zylinder (34) umfasst.

2. Prozess gemäß Anspruch 1, wobei das Verstärkungsgarnelement (t) die Führungswalzen (30) in Rotation antreibt, wobei die Führungswalzen (30) frei laufende Walzen sind.

3. Prozess gemäß Anspruch 1, wobei jedes Verstärkungsgarnelement (t) im Wesentlichen auf ein- und derselben Ebene läuft.

4. Prozess gemäß Anspruch 1, wobei die Verstärkungsgarnelemente (t) in zwei Gruppen organisiert sind, wobei die Gruppen in distinkten und parallelen Ebenen verlaufen.

5. Prozess gemäß Anspruch 1, weiter umfassend den Schritt (i^{vi}) des Justierens der gegenseitigen Position der gummierenden Zylinder (34).

6. Prozess gemäß Anspruch 5, wobei der Schritt (i^{vi}) relativ zu den kanalisierenden Oberflächen (35) stattfindet.

7. Prozess gemäß Anspruch 1, wobei der Schritt (ii) direkt auf dem kontinuierlichen bandartigen Element (S), das aus dem gummierenden Kopf (25) herauskommt, ausgeführt wird.

8. Prozess gemäß Anspruch 7, wobei der gummierende Kopf (25) die Führungswalzen (30) und ein Paar von gummierenden Zylindern (34) umfasst.

9. Prozess gemäß Anspruch 1, umfassend den Schritt des Aufwickelns des kontinuierlichen bandartigen Elements (S) auf eine Spule vor Ausführen des Schrittes (ii).

10. Prozess gemäß Anspruch 1, wobei das zumindest eine Verstärkungsgarnelement (t) einen Kord umfasst, der aus umeinander in einer ersten Weise gewickelten Drähten und aus einem in einer zweiten Weise entgegengesetzt zur ersten Weise auf den Kord gewickelten Hilfsdraht ausgebildet ist.

11. Prozess gemäß Anspruch 1, wobei die Komponente des Reifens (3), die prozessiert wird, zu einer Gürtelstruktur (8) gehört.

12. Prozess gemäß Anspruch 1, wobei die Komponente des Reifens (3), der prozessiert wird, zu einer Karkassenstruktur gehört.

13. Prozess gemäß Anspruch 1, wobei während des Schritts (iii) die streifenartigen Elemente (B) auf solche Weise aufgebaut werden, dass sie quer zur Äquatorialebene des Formungsträgers (16, 20, 22) angeordnet sind.

14. Prozess gemäß Anspruch 1, wobei eine weitere Komponente des Reifens (3), der prozessiert wird, durch einen Schritt (v) hergestellt wird, der den Schritt des Aufwickelns des kontinuierlichen bandartigen Elementes (S) in Spulen des Formungsträgers (16, 20, 22) am Ende des Schrittes (i) umfasst.

15. Vorrichtung zum Bauen von Reifen, umfassend:
- zumindest einen Formungsträger (16, 20, 22);
- zumindest eine Bauvorrichtung zum Ausformen zumindest einer Komponente des Reifens (3), der prozessiert wird, direkt auf dem Formungsträger (16, 20, 22), ausgehend von einem kontinuierlichen bandartigen Element (S), das zumindest ein Verstärkungsgarnelement (t) umfasst;
- zumindest eine Formungsvorrichtung (24), die zumindest einen gummierenden Kopf (25) und Vorrichtungen zum Zuführen des zumindest einen Verstärkungsgarnelements (t) zu dem gummierenden Kopf (25) umfasst:
wobei der gummierende Kopf (25) umfasst:
- ein Paar von Führungswalzen (30), von denen zumindest eine zumindest eine Umfangsrille (31) aufweist; und die Führungswalzen (30) zueinander weisen, um zumindest eine Öffnung (33) für das zumindest eine Verstärkungsgarnelement (t) abzugrenzen;
- ein Paar von gummierenden Zylindern (34), die stromabwärts der Führungswalzen (30) lokalisiert sind, um zumindest eine Schicht elastomeren Materials (E) auf dem zumindest einen Verstärkungsgarnelement (t) abzulagern;
**dadurch gekennzeichnet, dass** der gummierende Kopf (25) ein Gehäuse (26) umfasst, das eine innere Höhlung (27) abgrenzt, welche die Führungswalzen (30) aufnimmt und einen Einlass (28) für das zumindest eine Verstärkungsgarnelement (t) und einen Auslass (29), der zwischen den gummierenden Zylindern (34) positioniert ist, aufweist; wobei das Gehäuse (26) des gummierenden Kopfes (25) kanalisierende Oberflächen (35) für das elastomere Material (E) trägt, die alle zu einem entsprechenden gummierenden Zylinder (34) weisen.

16. Vorrichtung gemäß dem vorhergehenden Anspruch, wobei die Führungswalze (30) eine Mehrzahl von Umfangsrillen (31) aufweist, die in Seit-an-Seit-Beziehung angeordnet sind, zum Führen einer Mehrzahl von in Seit-an-Seit-Beziehung angeordneten Verstärkungsgarnelementen (t).

17. Vorrichtung gemäß Anspruch 15, wobei beide Führungsrollen (30) zumindest eine Umfangsrille (31) aufweisen.

18. Vorrichtung gemäß dem vorstehenden Anspruch, wobei die zumindest eine Umfangsrille (31) einer Walze (30) zur zumindest einen Umfangsrille (31) der anderen Walze (30) weist.

19. Vorrichtung gemäß Anspruch 17, wobei die zumindest eine Umfangsrille (31) einer Walze (30) axial relativ zur zumindest einen Umfangsrille (31) der anderen Walze (30) versetzt ist.

20. Vorrichtung gemäß Anspruch 15, wobei die Führungswalzen (30) frei laufende Walzen sind.

21. Vorrichtung gemäß Anspruch 15, wobei die Führungswalzen (30) einen Durchmesser zwischen etwa 5 mm und etwa 60 mm aufweisen.

22. Vorrichtung gemäß Anspruch 15, wobei die zumindest eine Öffnung (33) einen Durchtrittsquerschnitt (A) aufweist, der zwischen 0,25 mm² und etwa 4 mm² beträgt.

23. Vorrichtung gemäß Anspruch 15, wobei die Öffnungen (33), die Seite an Seite angeordnet sind, zueinander um einen Abstand (d) zwischen etwa 0,1 mm und etwa 2 mm beabstandet sind.

24. Vorrichtung gemäß Anspruch 15, wobei der gummierende Kopf (25) Vorrichtungen zum Justieren der gegenseitigen Position der gummierenden Zylinder (34) umfasst.

25. Vorrichtung gemäß Anspruch 15, wobei der gummierende Kopf (25) Vorrichtungen zum Justieren der Position der gummierenden Zylinder (34) relativ zu den kanalisierenden Oberflächen (35) umfasst.

26. Vorrichtung gemäß Anspruch 15, wobei der gummierende Kopf (25) Zufuhrtrakte (37) zum Zuführen des elastomeren Materials (E) umfasst, die alle eine zu einem entsprechenden gummierenden Zylinder (34) hinweisende Öffnung (36) aufweisen.

27. Vorrichtung gemäß Anspruch 15, wobei das Gehäuse (26) des gummierenden Kopfes (25) Zufuhrtrakte (37) zum Zuführen des elastomeren Materials (E) enthält, die alle eine zu einem entsprechenden gummierenden Zylinder (34) weisende Öffnung (36) aufweisen.

28. Vorrichtung gemäß Anspruch 15, wobei jede der kanalisierenden Oberflächen (35) zwischen der entsprechenden Öffnung (36) und dem Auslass (29) eingefügt ist.

## Revendications

1. Procédé de construction de pneumatiques, comprenant l'étape de formage d'au moins un composant du pneumatique (3) en cours de traitement directement sur un support de formage (16, 20, 22), dans lequel ledit au moins un composant est fabriqué par les étapes de :
(i) produire un élément en forme de ruban continu (S) comprenant au moins un élément filaire de renfort (t) ;
(ii) couper ledit élément en forme de ruban continu (S) à une taille de manière à former un élément en forme de bande (B) ;
(iii) appliquer ledit élément en forme de bande (B) sur le support de formage (16, 20, 22) ;
(iv) répéter les étapes (ii) et (iii) jusqu'à former ledit au moins un composant ;
dans lequel l'élément en forme de ruban continu (S) est produit au moyen des étapes suivantes :
(i') amener ledit au moins un élément filaire de renfort (t) par une ouverture (33) bornée par au moins une rainure circonférentielle (31) formée dans au moins deux rouleaux de guidage (30) se faisant face ;
(i") poser au moins une couche de matériau élastomère (E) sur ledit au moins un élément filaire de renfort (t) ;
dans lequel les deux rouleaux de guidage (30) sont logés dans une cavité interne (27) délimitée par un corps (26) d'une tête de caoutchoutage (25) ;
dans lequel ledit corps (26) porte deux surfaces de canalisation (35) du matériau élastomère, chacune faisant face à un cylindre de caoutchoutage respectif (34) ;
dans lequel l'étape (i") comprend les étapes de :
(i''') amener ledit au moins un élément filaire de renfort (t) aux cylindres de caoutchoutage (34) ;
(i^{iv}) introduire le matériau élastomère (E) entre lesdits cylindres de caoutchoutage (34) ;
dans lequel ladite étape (i^{iv}) comprend l'étape (i^{v}) d'amenée ledit matériau élastomère (E) entre chaque surface de canalisation (35) et le cylindre respectif de caoutchoutage (34).

2. Procédé selon la revendication 1, dans lequel l'élément filaire de renfort (t) entraine en rotation les rouleaux de guidage (30), lesdits rouleaux de guidage étant des rouleaux libres.

3. Procédé selon la revendication 1, dans lequel chaque élément filaire de renfort (t) avance sensiblement dans un seul et même plan.

4. Procédé selon la revendication 1, dans lequel les éléments filaires de renfort (t) sont organisés en deux groupes, lesdits groupes avançant dans des plans distincts et parallèles.

5. Procédé selon la revendication 1, comprenant en outre l'étape (i^{vi}) de réglage de la position mutuelle des cylindres de caoutchoutage (34).

6. Procédé selon la revendication 5, dans lequel ladite étape (i^{vi}) a lieu par rapport aux surfaces de canalisation.

7. Procédé selon la revendication 1, dans lequel ladite étape (ii) est directement réalisée sur l'élément en forme de ruban continu (S) sortant de la tête de caoutchoutage (25).

8. Procédé selon la revendication 7, dans lequel ladite tête de caoutchoutage (25) comprend lesdits rouleaux de guidage (30) et une paire de cylindres de caoutchoutage (34).

9. Procédé selon la revendication 1, comprenant l'étape d'enroulement de l'élément en forme de ruban continu (S) sur une bobine avant d'effectuer ladite étape (ii).

10. Procédé selon la revendication 1, dans lequel ledit au moins un élément filaire de renfort (t) comprend une corde formée de fils mutuellement enroulés dans un premier sens et un fil auxiliaire enroulé sur la corde dans un second sens opposé au premier.

11. Procédé selon la revendication 1, dans lequel ledit composant du pneumatique (3) en cours de traitement appartient à une structure de ceinture (8).

12. Procédé selon la revendication 1, dans lequel ledit composant du pneumatique (3) en cours de traitement appartient à une structure de carcasse.

13. Procédé selon la revendication 1, dans lequel pendant ladite étape (iii) les éléments en forme de bande (B) sont appliqués de sorte qu'ils sont disposés transversalement au plan équatorial du support de formage (16, 20, 22).

14. Procédé selon la revendication 1, dans lequel un composant supplémentaire du pneumatique (3) en cours de traitement est fabriqué par une étape (v) comprenant l'étape d'enroulement de l'élément en forme de ruban continu (S) en bobines sur le support de formage (16, 20, 22) à la fin de ladite étape (i).

15. Equipement de construction de pneumatiques, comprenant :
- au moins un support de formage (16, 20, 22) ;
- au moins un dispositif de construction pour former au moins un composant du pneumatique (3) en cours de traitement directement sur le support de formage (16, 20, 22) à partir d'un élément en forme de ruban continu (S) comprenant au moins un élément filaire de renfort (t) ;
- au moins un dispositif de formage (24) comprenant au moins une tête de caoutchoutage (25) et des dispositifs pour amener ledit au moins un élément filaire de renfort (t) à la tête de caoutchoutage (25) ;
dans lequel la tête de caoutchoutage (25) comprend :
- une paire de rouleaux de guidage (30), l'un au moins ayant au moins une rainure circonférentielle (31) ; les rouleaux de guidage (30) se faisant face pour délimiter au moins une ouverture (33) pour ledit au moins un élément filaire de renfort (t) ;
- une paire de cylindres de caoutchoutage (34) situés en aval des rouleaux de guidage (30), pour poser au moins une couche de matériau élastomère (E) sur ledit au moins un élément filaire de renfort (t) ;
**caractérisé en ce que** la tête de caoutchoutage (25) comprend un corps (26) délimitant une cavité interne (27) logeant les rouleaux de guidage (30) et ayant une entrée (28) pour ledit au moins un élément filaire de renfort (t) et une sortie (29) positionné entre les cylindres de caoutchoutage (34) ; dans lequel le corps (26) de la tête de caoutchoutage (25) porte des surfaces de canalisation (35) du matériau élastomère (E), chacune faisant face à un cylindre de caoutchoutage respectif (34).

16. Equipement selon la revendication précédente, dans lequel le rouleau de guidage (30) a plusieurs rainures circonférentielles (31) disposées côte à côte pour guider plusieurs éléments filaires de renfort (t) disposés côte à côte.

17. Equipement selon la revendication 15, dans lequel les deux rouleaux de guidage (30) ont au moins une rainure circonférentielle (31).

18. Equipement selon la revendication précédente, dans lequel ladite au moins une rainure circonférentielle (31) d'un rouleau (30) fait face à ladite au moins une rainure circonférentielle (31) de l'autre rouleau (30).

19. Equipement selon la revendication 17, dans lequel au moins une rainure circonférentielle (31) d'un rouleau (30) est décalée axialement par rapport à ladite au moins une rainure circonférentielle (31) de l'autre rouleau (30).

20. Equipement selon la revendication 15, dans lequel les rouleaux de guidage (30) sont des rouleaux libres.

21. Equipement selon la revendication 15, dans lequel les rouleaux de guidage (30) ont un diamètre compris entre environ 5 mm et environ 60 mm.

22. Equipement selon la revendication 15, dans lequel ladite au moins une ouverture (33) a une section de passage (A) incluse entre environ 0.25 mm² et environ 4 mm².

23. Equipement selon la revendication 15, dans lequel les ouvertures (33) disposées côte-à-côte sont mutuellement espacées d'une distance (d) comprise entre environ 0.1 mm et environ 2 mm.

24. Equipement selon la revendication 15, dans lequel la tête de caoutchoutage (25) comprend des dispositifs pour régler la position mutuelle des cylindres de caoutchoutage (34).

25. Equipement selon la revendication 15, dans lequel la tête de caoutchoutage (25) comprend des dispositifs pour régler la position des cylindres de caoutchoutage (34) par rapport aux surfaces de canalisation (35).

26. Equipement selon la revendication 15, dans lequel la tête de caoutchoutage (25) comprend des conduits d'alimentation (37) pour fournir le matériau élastomère (E), chacun ayant un orifice (36) faisant face à un cylindre de caoutchoutage (34) respectif.

27. Equipement selon la revendication 15, dans lequel le corps (26) de la tête de caoutchoutage (25) contient des conduits d'alimentation (37) pour fournir le matériau élastomère (E), d'eux chacun ayant un orifice (36) faisant face à un cylindre de caoutchoutage respectif (34).

28. Equipement selon la revendication 15, dans lequel chacune des surfaces de canalisation (35) est placée entre l'orifice respectif (36) et la sortie (29).
